# EUROPEAN PATENT APPLICATION

(11) **EP 0 863 061 A1**
(43) Date of publication of application: **09.09.1998**
(21) Application number: 98830114.9
(22) Date of filing: 04.03.1998
(51) Int. Cl.: B60T 3/00

(54) **Chock for trucks and industrial vehicles**

(30) Priority: 07.03.1997 IT BS970019
(71) Applicant: Archetti F.lli di Archetti Luigi & C. S.n.c., 25030 Coccaglio (Brescia) (IT)
(72) Inventor: Archetti, Luigi, 25030 Coccaglio, (Brescia) (IT)
(74) Representative: Manzoni, Alessandro

(57) **Abstract**

The invention concerns a chock or wedged block for trucks and industrial vehicles. It is made from a single whole element (11) cut from steel sheeting, with longitudinal right angled bent borders (14',15', 16') folded on to itself in correspondence with two transversal parallel lines to form a wedge shaped body, welded laterally at least at the point where the areas of the right angled edges (14',15' 16') are adjacent so as to form a solid structure with a rectangular base (A), an inclined reinforced plane as a wheel rest (B) and a reaction strut (C) between the base and the wheel-rest plane.

## Description

The present invention concerns chocks, also known as wedge blocks, for trucks, trailers and industrial vehicles in general to stop them from carrying out uncontrolled movements in particular when stopped on a slope.

These chocks are usually wedge shaped made up of two or more elements made separately and then assembled together usually by means of welding. The preparation of several disassembled elements, besides the high execution time beforehand and then assembly, always implies a waste of material because of swarf created during machining which cannot be avoided during cutting of individual elements due to their configuration.

The aim of the present invention is on the other hand to propose a chock made of one piece, easily made with very little swarf, resulting therefore in less consumption of material plus a reduction in time and costs, always and however in compliance with the regulations in force on the subject such as the DIN standard 76051 - November 1992.

To that aim, the chock or wedge block according to the claim is made up of a single whole element, cut from steel sheeting, with the longitudinal edges bent at right angles, folded over on to itself in correspondence with two transverse parallel lines to form a wedge shaped body, and welded laterally at the point where the areas of the edges are adjacent so as to form a solid structure with a rectangular base, an inclined plane as a wheel rest and a reaction strut between the base and the wheel-rest plane without a gap.

Further details of the claim will however become clearer from the description which follows made in reference to the enclosed indicative and not limiting drawings in which:
Fig. 1 is a top view of the full extension of the component at the start before the chock is made;
Fig. 2 is a view of the initial element after bending its longitudinal edges;
Fig. 3 is an end view of the initial element as shown in Fig. 2;
Fig. 4 is the assembled chock starting from the element in Fig. 2;
Fig. 5 is a view of the finished chock from the reaction strut side; and
Fig. 6 is a partial cross-section of the finished chock.

The chock has a wedge shape 10 formed from a single flat initial element 11 cut from steel sheeting.

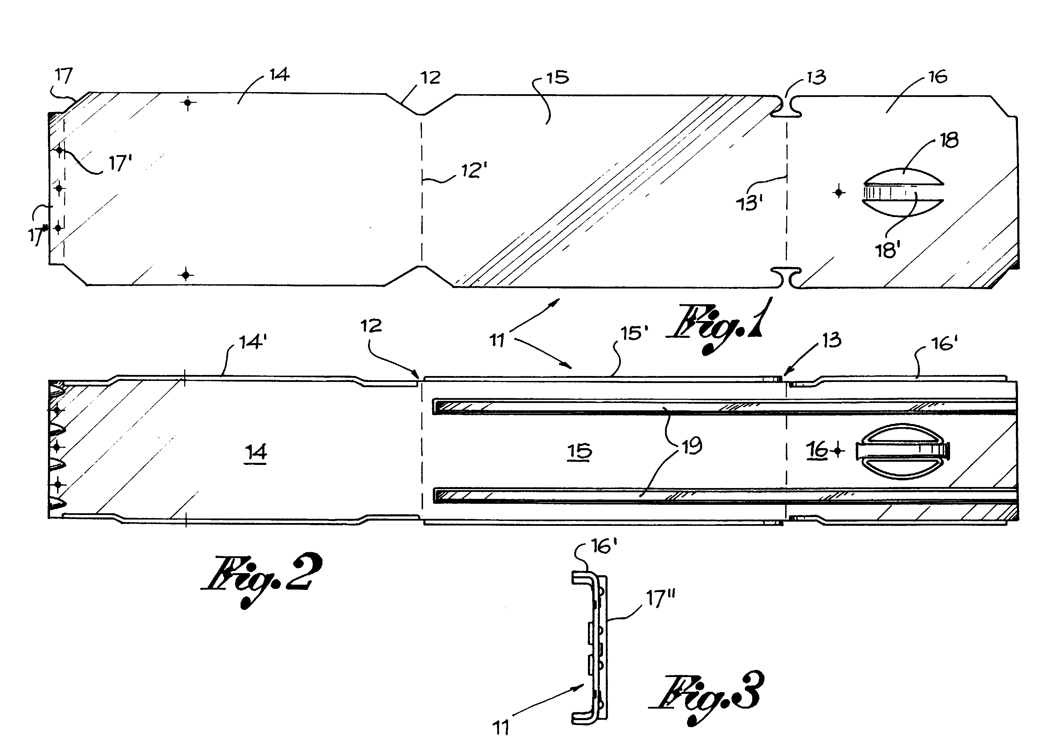

This initial element has a rectangular shaped development - see Fig. 1 - with pairs of indents 12, 13 along its longitudinal sides, each in correspondence with the two transversal theoretical lines in the initial section 14, followed by an intermediate section 15 and an end section 16.

At the free end of the initial section 14 there can be two bevels provided 17 in line with a third successive theoretical folding line 17' of the end portion 17" of said initial section 14. Two holes 18 have been made in the end portion 16 separated by an intermediate rib 18' which will act as a pick up handle for transporting the finished article.

The longitudinal margins of the basic element thus structured are then bent at right angles, all in the same direction, so as to create right angled borders 14', 15', 16' in correspondence with the three consecutive sections 14, 15, 16, respectively - see. Fig - g.2 and 3-, making sure that the adjacent ends of said borders are not in line so that they do not come into contact with each other when the element is later folded over on to itself as described below.

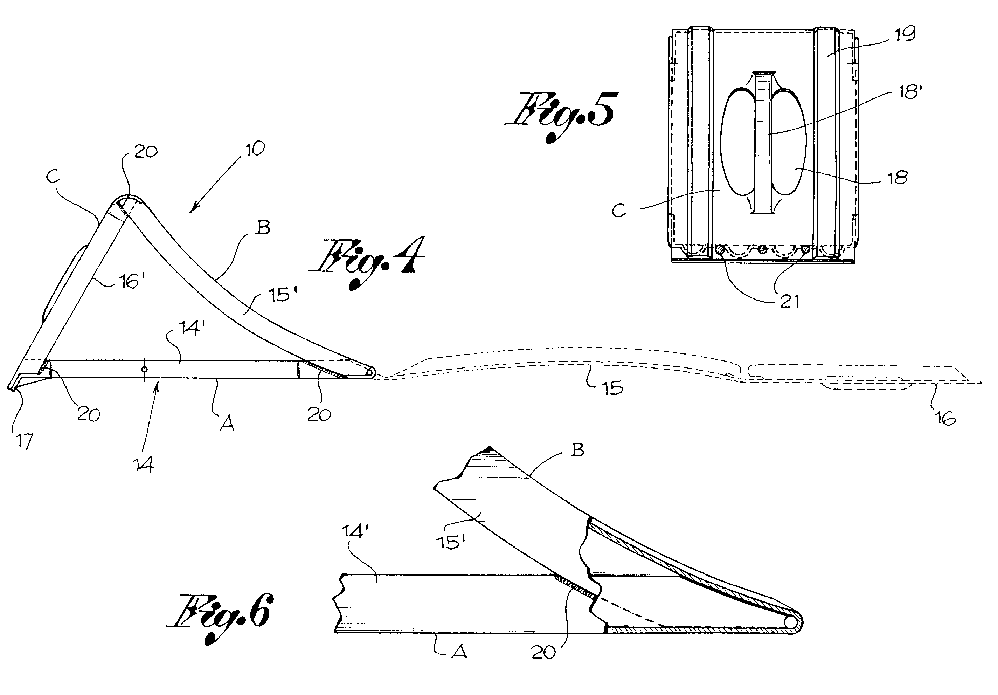

The end section 17" of the initial section 14 is folded in the opposite direction to the right angled borders, that is downwards - see Fig. 3. Drawn reinforcement ribs 19 parallel to the longitudinal sides have been positioned in the intermediate 15 and final 16 sections of the initial element. The intermediate portion 15 is also curved lengthwise.

The initial element prepared in this way is then folded in correspondence to the hypothetical transversal lines 12', 13', and closed on to itself - see Fig. 4 - with the right angled borders 14', 15', 16' facing the inside and sufficient to overlap the free end of the final portion 16 with the bent final portion 17" of the initial element 14.

The result is a single piece wedge shaped structure, that is a chock 10, with a rectangular base and triangular in shape when seen from the side, in which the initial portion 14 of the initial element forms the base A, the intermediate portion 15, a reinforced wheel-rest plane B and the final section with reaction strut C between the base and the wheel-rest section.

For maximum stability of the chock and preservation of shape even under load, the ends of the right angled borders 14', 15', 16' are shaped and dimensioned to rest against the internal surface of the adjacent section at the top of the wedge structure. These borders are welded together at 20, that is in the adjacent and overlapping zones, and the end of the final section 16 which forms the reaction strut C is welded at 21 to the end bent section of the initial section 14 which forms the base A as shown in the detail in Fig. 5.

## Claims

1. Chock or wedge block for trucks and industrial vehicles, characterized by the fact that it is made up of a single whole element (11), cut from steel sheeting with longitudinal borders bent at right angles (14',15',16'), folded over on to itself in correspondence with two transversal parallel lines to form a wedge shaped structure and welded laterally at least where some adjacent parts of said right angled borders (14',15',16') meet to form a solid structure having a rectangular base (A), a sloping reinforced wheel rest plane (B) and a reaction strut (C) between the base and wheel-rest plane without a gap.

2. Chock according to claim 1, where the said initial element (11) is flat with an extension which is practically rectangular having two pairs of indents (12,13) along its longitudinal edges and some bevels (17) near one of its ends, where the right angled borders (14',15',16') are positioned between said indents and in correspondence with an initial section (14), an intermediate curved section (15) and a final section (16), respectively of the initial element and where the end portion (17") of said initial section (14) is bent at an angle to said bevels, and where said element is folded and closed on to itself along transversal lines (12',13') passing through said indents and sufficient enough to overlap the free end of the final section with the angled part (17") of the initial section so that the initial section forms the base (A), the intermediate wheel-rest section (B) and the final section the reaction strut (C) of the resulting solid structure.

3. Chock according to claim 1, where the right angled borders (14',15', 16') are facing inwards in relation to the solid structure and where the ends of said borders are in contact with the internal surfaces of the corners of the structure of the adjacent sections.

4. Chock according to claim 3 where said adjacent sectors of the borders are welded together and where the free section of the final section which forms the reaction strut is welded to the bent end portion of the initial section which forms the base.

5. Chock according to any previous claim where at least the wheel-rest plane and the reaction strut have ribs or reinforcements, and where slots have been cut in the reaction strut to form a handle.
